# EUROPEAN PATENT SPECIFICATION

(11) **EP 1 398 576 B1**
(45) Date of publication and mention of the grant of the patent: **01.12.2010**
(21) Application number: 03290615.8
(22) Date of filing: 12.03.2003
(51) Int. Cl.: F24F 11/00

(54) **Operating method of air conditioner and system using the same**
Verfahren zum Betrieb einer Klimaanlage und System unter Verwendung desselben
Procédé d'opération d'un appareil de conditionnement d'air et système l'utilisant

(30) Priority: 10.09.2002 KR 2002054760
(43) Date of publication of application: 17.03.2004
(73) Proprietor: LG Electronics, Inc., Seoul (KR)
(72) Inventor: Yoo, Youn Ho, Kangnam-gu, Seoul (KR); Choi, Ho Seon, Dongjak-gu, Seoul (KR); Lee, Gi Seop, Namdong-gu, Incheon-si (KR); Yum, Kwan Ho, Guro-gu, Seoul (KR); Huh, Deok, Boocheon-si, Gyeonggi-do (KR)
(74) Representative: Bentz, Jean-Paul

(56) References cited:
- US-A- 5 062 276
- US-A- 5 247 806
- US-A- 5 345 776
- US-A- 5 628 201

## Description

### BACKGROUND OF THE INVENTION

### Field of the Invention

The present invention relates to an air conditioner, and more particularly, to an operating method of an air conditioner, in which an indoor environment is maintained pleasantly.

### Background of the Prior Art

Generally, an air conditioner with a dehumidifying function has a heat exchanger acting as a condenser and a heat exchanger acting as an evaporator, which are installed in an indoor heat exchanging unit disposed at an interior of a room, and focuses on a maintenance of a constant temperature and a dehumidification.

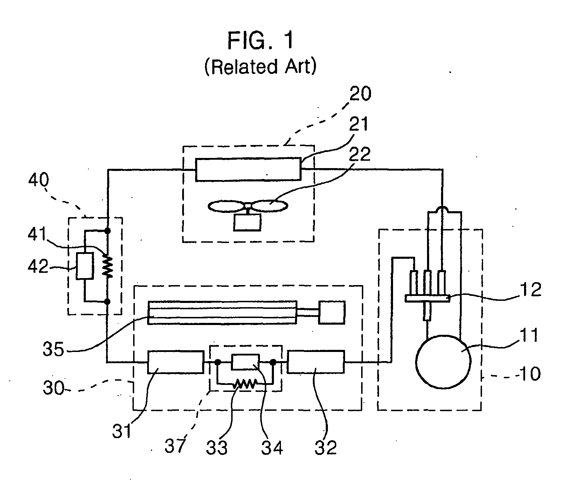

FIG. 1 is a schematic view of a conventional air conditioner. Referring to FIG. 1, the conventional air conditioner includes: a compression unit 10 for compressing a refrigerant; an outdoor heat exchanging unit 20 having a heat exchanger 21 and a fan 22, for exchanging heat between the refrigerant and an outdoor air; an indoor heat exchanging unit 30 having a first heat exchanger 31, a second heat exchanger 32, an indoor expansion unit 37 disposed between the first heat exchanger 31 and the second heat exchanger 32, and an indoor fan 35; and an expansion unit 40 disposed between the outdoor heat exchanging unit 20 and the indoor heat exchanging unit 30.

The compression unit 10 includes: a compressor 11 for converting a low-temperature and low-pressure gaseous refrigerant, outputted from the outdoor heat exchanging unit 20 or the indoor heat exchanging unit 30, into a high-temperature and high-pressure gaseous refrigerant; and a four-way valve 12 for determining an exhausting direction of the compressor 11. In case of cooling an interior of a room by switching suction pipes and exhaust pipes, the four-way valve 12 allows the indoor heat exchanging unit 30 to operate as an evaporator, and in case of heating an interior of a room, the four-way valve 12 allows the indoor heat exchanging unit 30 to operate as a condenser. Of course, corresponding to the above operations of the four-way valve 12, the outdoor heat exchanging unit 20 operates respectively as the condenser and the evaporator. Meanwhile, since this description brings focus into the case that the equipment is used as a dehumidifier, it is hereinafter assumed that the outdoor heat exchanging unit 20 and the indoor heat exchanging unit 30 operate as the condenser and the evaporator, respectively.

The outdoor heat exchanging unit 20 is means for converting a high-temperature and high-pressure gaseous refrigerant, generated from the compression unit 10, into a middle-temperature and high-pressure liquid refrigerant. For that, the outdoor heat exchanging unit 20 is provided with the condenser 21 and the outdoor fan 22.

The expansion unit 40 is means for converting a medium-temperature and high-pressure liquid refrigerant into a low-temperature and low-pressure liquid refrigerant and it is provided with a capillary tube 41 and a first valve 42 connected in parallel with the capillary tube 41. Whether to allow the refrigerant to flow through the capillary tube 41 or not is determined by the first valve 42. In other words, if the first valve 42 is opened, the refrigerant flows through the first valve 42, and if the first valve 42 is closed, the refrigerant flows through the capillary tube 41. In the above control of determining whether to allow the refrigerant to flow through the capillary tube 41, since the expansion unit 40 should not perform an expansion process when the equipment is used as the dehumidifier, the first valve 42 is opened to allow the refrigerant to flow through the first valve 42.

Like that, since the expansion process is not performed, the liquid refrigerant of a medium-temperature and high-pressure state is introduced into the indoor heat exchanging unit 30 as it is. As described above, the indoor heat exchanging unit 30 includes the first heat exchanger 31, the second heat exchanger 32 and the indoor expansion unit 37 disposed therebetween. The condensation process is performed in the first heat exchanger 31 once more, and the expansion process is performed in an indoor expander 33 of the indoor expansion unit 37. This expansion process causes the medium-temperature and high-pressure liquid refrigerant to be converted into the low-temperature and low-pressure liquid refrigerant. The second heat exchanger 32 absorbs and evaporates an adjacent heat of the low-temperature and low-pressure liquid refrigerant to thereby convert it into a low-temperature and low-pressure gaseous refrigerant. Then, the low-temperature and low-pressure gaseous refrigerant is again introduced into the compression unit 10.

If the equipment operates not as the dehumidifier but as the air conditioner, the expansion process is performed in the expansion unit 40 and the first exchanger 31 also operates as the evaporator like the second heat exchanger 32. Of course, at this time, it is noted that a second valve 34 of the indoor expansion unit 37 is opened so as not to operate the indoor expander 33.

In an operation of the air conditioner with the conventional dehumidifying function constructed as above, an adjacent moisture is dehumidified due to an evaporation of the refrigerant in the second heat exchanger 32. At this time, the dehumidification is achieved by exhausting the dehumidified moisture to an exterior. Of course, the indoor temperature is also lowered during this procedure. In order to prevent that, the first heat exchanger 31 is allowed to operate as the condenser to thereby achieve a temperature equilibrium.

However, when the dehumidifying process is carried out under the indoor environment, the conventional air conditioner drives the compressor and the indoor/outdoor fans with a constant frequency of the compressor regardless of the outdoor temperature, so that it is impossible to maintain a pleasant area in which a user can feel pleasant. Accordingly, it is difficult to maintain the indoor dehumidification and the indoor constant temperature. In addition, since the constant frequency of the compressor is used, power consumption is enormously increased.

US-A-5 345 776 discloses an operating method of a dehumidifying air conditioner comprising the steps a), b), f) and g) of claim 1.

### SUMMARY OF THE INVENTION

Accordingly, the present invention is directed to an operating method of an air conditioner that substantially obviate one or more problems due to limitations and disadvantages of the related art.

It is an object of the present invention to provide an operating method of an air conditioner, in which a pleasant area is maintained and a dehumidifying performance is improved because the air conditioner is operated using all of a rotation speed of an outdoor fan, a frequency of a compressor and a rotation of an indoor fan.

It is another object of the present invention to provide an operating method of an air conditioner, in which power consumption is remarkably reduced because the air conditioner is operated while varying a frequency of a compressor as well as rotation speeds of an outdoor fan and an indoor fan.

To achieve the above objects, in accordance with an embodiment of the present invention, there is provided an operating method of a power-saving and dehumidifying air conditioner, which comprises the steps of: a) determining a rotation speed of an outdoor fan using a temperature fuzzy relationship table based on a temperature difference and a temperature variation rate; b) determining a frequency of a compressor using a humidity fuzzy relationship table based on a humidity difference and a humidity variation rate; c) varying the determined frequency of the compressor using an outdoor temperature; d) determining a rotation speed of an indoor fan, the rotation speed of the indoor fan being proportional to the varied frequency of the compressor; e) operating the air conditioner according to the rotation speed of the outdoor fan, the varied frequency of the compressor and the rotation speed of the indoor fan; f) determining whether or not a current indoor environment satisfies pleasant area conditions; and g) repeatedly performing the steps a) to f) until the current indoor environment satisfies the pleasant area conditions.

The rotation speed of the outdoor fan and the frequency of the compress or are determined using a fuzzy logic algorithm.

The temperature difference in the step a) is a difference between an indoor temperature and a set temperature, in which the indoor temperature is detected by an indoor-temperature detecting sensor and the set temperature is set by a user. The temperature variation rate in the step a) is a rate with respect to a time between a current indoor temperature detected by an indoor-temperature detecting sensor and an indoor temperature detected prior to a predetermined time from the current indoor temperature.

The humidity difference in the step b) is a difference between an indoor humidify and a set humidity, in which the indoor humidity is detected by an indoor-humidity detecting sensor and the set humidity is set by a user. The humidity variation rate in the step b) is a rate with respect to a time between a current indoor humidity detected by an indoor-humidity detecting sensor and an indoor humidity detected prior to a predetermined time from the current indoor humidity.

The step a) includes the steps of: comparing the temperature difference with a plurality of temperature-difference threshold values to select one temperature-difference threshold value; comparing the temperature variation rate with a plurality of temperature-variation rate threshold vales to select one temperature-variation rate threshold value; and determining the rotation speed of the outdoor fan corresponding to the selected temperature-difference threshold value and the selected temperature-variation rate threshold value in the temperature fuzzy relationship table.

The step b) includes the steps of: comparing the humidity difference with a plurality of humidity-difference threshold values to select one humidity-difference threshold value; comparing the humidity variation rate with a plurality of humidity-variation rate threshold vales to select one humidity-variation rate threshold value; and determining the frequency of the compressor corresponding to the selected humidity-difference threshold value and the selected humidity-variation rate threshold value in the humidity fuzzy relationship table.

In the step c), if the outdoor temperature is lower than a first outdoor-temperature threshold value, the frequency of the compressor is relatively reduced. Meanwhile, if the outdoor temperature is higher than a second outdoor-temperature threshold value, the frequency of the compressor is relatively increased. In addition, if the outdoor temperature is in a range between a first outdoor-temperature threshold value and a second outdoor-temperature threshold value, the frequency of the compressor is not changed.

The step d) includes the steps of: comparing the varied frequency of the compressor with a plurality of frequency threshold values to select one frequency threshold value; and determining the rotation speed of the indoor fan corresponding to the selected frequency threshold value.

The pleasant area conditions is an indoor temperature of 24° to 26° and an indoor humidity of 40% to 60%.

It is to be understood that both the foregoing general description and the following detailed description of the present invention are exemplary and explanatory and are intended to provide further explanation of the present invention as claimed.

### BRIEF DESCRIPTION OF THE DRAWINGS

The accompanying drawings, which are included to provide a further understanding of the present invention and are incorporated in and constitute a part of this application, illustrate embodiment(s) of the present invention and together with the description serve to explain the principle of the present invention. In the drawings:
FIG. 1 is a schematic view of a conventional air conditioner;
FIG. 2 is a flowchart showing an operating method of an air conditioner in accordance with a preferable embodiment of the present invention;
FIG. 3 is a flowchart showing the method of determining the rotation speed of the outdoor fan in FIG. 2;
FIG. 4 is a flowchart showing the method of determining the frequency of the compressor in FIG. 2;
FIG. 5 is a flowchart showing the method of changing the frequency of the compressor in FIG. 2;
FIG. 6 is a flowchart showing the method of determining the rotation speed of the indoor fan in FIG. 2;
FIG. 7 is a temperature fuzzy relationship table used to determine the rotation speed of the outdoor fan in FIG. 2;
FIG. 8 is a humidity fuzzy relationship table used to determine the frequency of the compressor in FIG. 2; and
FIG. 9 is a graph showing the pleasant area conditions used to maintain the pleasant area in FIG. 2.

### DETAILED DESCRIPTION OF THE PREFERRED EMBODIMENTS

Reference will now be made in detail to a preferred embodiment of the present invention with reference to the attached drawings.

The present invention provides an operating method of an air conditioner, in which the dehumidification and power saving operations are achieved while maintaining a pleasant area. For this, a fuzzy logic algorithm is applied to the present invention.

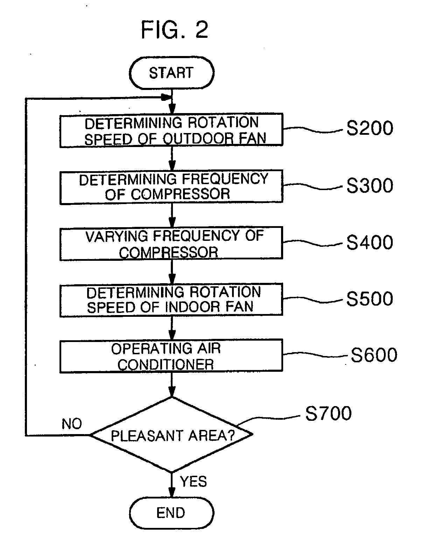

FIG. 2 is a flowchart showing an operating method of an air conditioner in accordance with a preferable embodiment of the present invention. Referring to FIG. 2, the operating method of the air conditioner in accordance with the present invention includes the steps of: determining a rotation speed of the outdoor fan 22 (S200); determining a frequency of the compressor 11 (S300); varying the determined frequency of the compressor 11 (S400) ; determining a rotation speed of the indoor fan 35 using the varied frequency of the compressor (S500); operating the air conditioner according to the determined rotation speed of the outdoor fan 22, the varied frequency of the compressor 11 and the determined rotation speed of the indoor fan 35 (S600) ; and repeatedly performing the above steps until the indoor environment satisfies the pleasant area conditions (S700). Here, the fuzzy logic algorithm is applied to the steps S200 and S300.

Hereinafter, the respective steps will be described in detail.

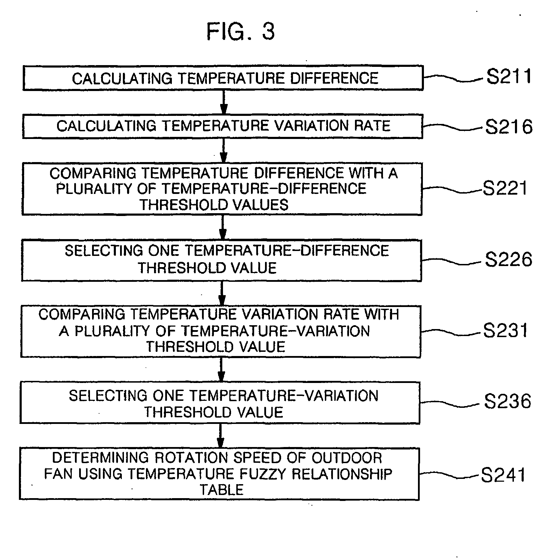

The step S200 of determining the rotation speed of the outdoor fan 22 will be described with reference to FIG. 3.

FIG. 3 is a flowchart showing the method of determining the rotation speed of the outdoor fan in FIG. 2. Referring to FIG. 3, a temperature difference is calculated using a difference between an indoor temperature, which is detected by an indoor-temperature detecting sensor (not shown), and a set temperature, which is set through a remote controller, etc., by a user (S211). Here, the indoor-temperature detecting sensor is disposed at a predetermined position of the indoor heat exchanging unit 30 and detects a temperature of a cool air exhausted into an interior of a room. The temperature difference (□t) is a value obtained by subtracting the set temperature from the indoor temperature, and it can be a positive value or a negative value. In other words, if the indoor temperature is higher than the set temperature, the temperature difference becomes the positive value, and if the indoor temperature is lower than the set temperature, the temperature difference becomes the negative value.

A temperature variation rate is calculated using the indoor temperature detected by the indoor-temperature detecting sensor and an indoor temperature detected prior to a predetermined time (S216). In other words, the temperature variation rate is a rate with respect to a time between the detected current indoor temperature and the previous indoor temperature.

The temperature difference calculated in the step S211 is compared with a plurality of temperature-difference threshold values to select one temperature-difference threshold value (S221, S226). Here, the plurality of temperature-difference threshold values are set to an NB (Negative Big), an NS (Negative Small), a ZO (Zero), a PS (Positive Small) and a PB (Positive Big). The "ZO" represents a temperature difference of "0". The "NS" represents a value that has a smaller temperature difference than the "ZO" and is negative. The "NB" represents a value that has a larger temperature difference than the "ZO" and is negative. The "PS" represents a value that has a smaller temperature difference and is positive. The "PB" represents a value that has a larger temperature difference and is positive. For example, the "NS", "NB", "PS" and "PB" can be set to -1, -3, 1 and 3, respectively.

By comparing the temperature difference with the plurality of temperature-difference threshold values, one temperature-difference threshold value is selected. For example, if the temperature difference is 2 and one of the temperature-difference-threshold values is the PS (e.g., 1), one threshold value PS is selected.

By comparing the temperature variation rate calculated in the step S216 with a plurality of temperature-variation rate threshold values, one temperature-variation rate threshold value is selected (S231, S236). Here, like the plurality of temperature-difference threshold values, the plurality of temperature-variation rate threshold values are set to an NB (Negative Big), an NS (Negative Small), a ZO (Zero), a PS (Positive Small) and a PB (Positive Big). The "ZO" represents a temperature difference of "0". The "NS" represents a value that has a smaller temperature difference than the "ZO" and is negative. The "NB" represents a value that has a larger temperature difference than the "ZO" and is negative. The "PS" represents a value that has a small temperature difference and is positive. The "PB" represents a value that has a large temperature difference and is positive. For example, "NS", "NB", "PS" and "PB" can be set to -1, -3, 1 and 3, respectively.

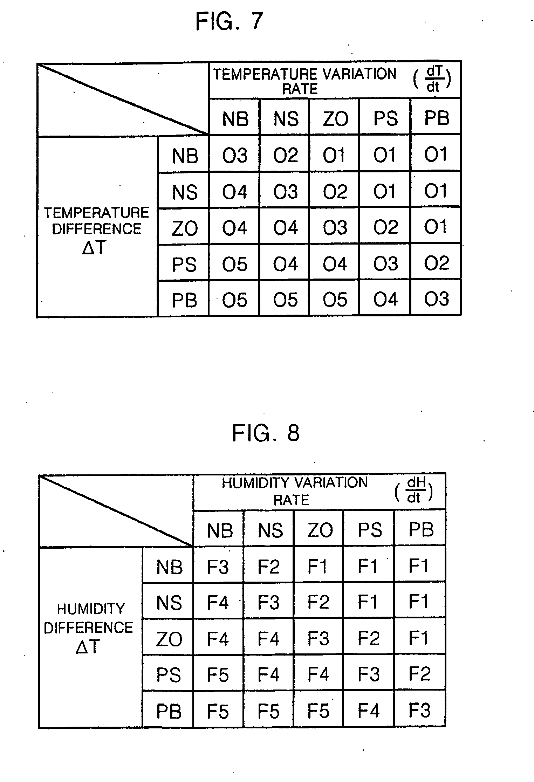

Based on one temperature-difference threshold value selected in the step S226 and one temperature-variation rate threshold value selected in the step S236, the rotation speed of the outdoor fan is determined using a temperature fuzzy relationship table (S241). For example, if one temperature-difference threshold value is the PS and one temperature-variation rate threshold value is the PS, "O3" is determined as the rotation speed of the outdoor fan, as shown in FIG. 7. The rotation speed of the outdoor fan can be "O1" mode to "O5" mode. At this time, the rotation speed of the outdoor fan is the smallest in the "O1" mode and the largest in the "O5" mode.

According to the step S200, while the rotation speed of the outdoor fan increases when the temperature difference increases in the positive direction and the temperature variation rate increases in the negative direction, the rotation speed of the outdoor fan decreases when the temperature difference increases in the negative direction and the temperature variation rate increases in the positive direction.

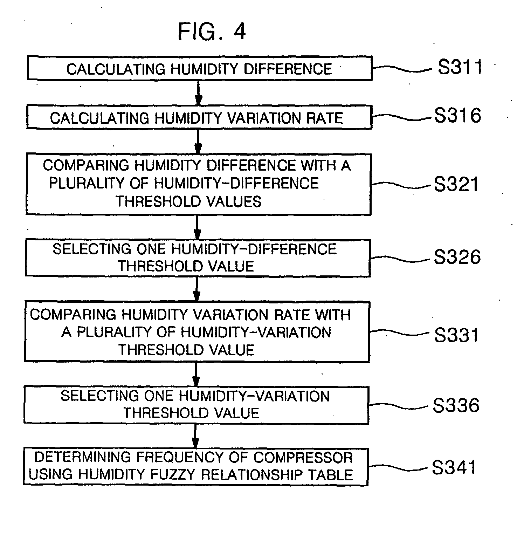

Then, the step S300 of determining the frequency of the compressor will be described with reference to FIG. 4. FIG. 4 is a flowchart showing the method of determining the frequency of the compressor in FIG. 2. Referring to FIG. 4, a humidity difference is calculated using a difference between an indoor humidity, which is detected by an indoor-humidity detecting sensor (not shown), and a set humidity, which is set through a remote controller, etc., by a user (S311). Here, the indoor-humidity detecting sensor is disposed at a predetermined position of the indoor heat exchanging unit 30. The humidity difference (□H) is a value obtained by subtracting the set humidity from the indoor humidity, and it can be a positive value or a negative value. In other words, if the indoor humidity is higher than the set humidity, the humidity difference becomes the positive value, and if the indoor humidity is lower than the set humidity, the humidity difference becomes the negative value.

A humidity variation rate is calculated using the indoor humidity detected by the indoor-humidity detecting sensor and an indoor humidity detected prior to a predetermined time (S316). In other words, the humidity variation rate is a rate with respect to a time between the detected current indoor humidity and the previous indoor humidity.

The humidity difference calculated in the step S311 is compared with a plurality of humidity-difference threshold values to select one humidity-difference threshold value (S321, S326). Here, the plurality of humidity-difference threshold values are set to an NB (Negative Big), an NS (Negative Small), a ZO (Zero), a PS (Positive Small) and a PB (Positive Big). The "ZO" represents a humidity difference of "0". The "NS" represents a value that has a smaller humidity difference than the "ZO" and is negative. The "NB" represents a value that has a larger humidity difference than the "ZO" and is negative. The "PS" represents a value that has a small humidity difference and is positive. The "PB" represents a value that has a large humidity difference and is positive. For example, "NS", "NB", "PS" and "PB" can be set to -1, -3, 1 and 3, respectively.

By comparing the humidity variation rate calculated in the step S316 with a plurality of humidity-variation rate threshold values, one humidity-variation rate threshold value is selected (S331, S336). Here, like the plurality of humidity-difference threshold values, the plurality of humidity-variation rate threshold values are set to an NB (Negative Big), an NS (Negative Small), a ZO (Zero), a PS (Positive Small) and a PB (Positive Big). The "ZO" represents a temperature difference of "0". The "NS" represents a value that has a smaller temperature difference than the "ZO" and is negative. The "NB" represents a value that has a larger temperature difference than the "ZO" and is negative. The "PS" represents a value that has a small temperature difference and is positive. The "PB" represents a value that has a large temperature difference and is positive. For example, "NS", "NB", "PS" and "PB" can be set to -1, -3, 1 and 3, respectively.

Based on one humidity-difference threshold value selected in the step S326 and one humidity-variation rate threshold value selected in the step S336, the frequency of the compressor is determined using a humidity fuzzy relationship table (S341). For example, if one humidity-difference threshold value is the PS and one humidity-variation rate threshold value is the PS, "F3 is determined as the frequency of the compressor, as shown in FIG. 8. The frequency of the compressor can be "F1" mode to "F5" mode. At this time, the frequency of the compressor is the smallest in the "F1" mode and the largest in the "F5" mode.

According to the step S300, while the rotation speed of the outdoor fan increases when the humidity difference increases in the positive direction and the humidity variation rate increases in the negative direction, the rotation speed of the outdoor fan decreases when the humidity difference increases in the negative direction and the humidity variation rate increases in the positive direction.

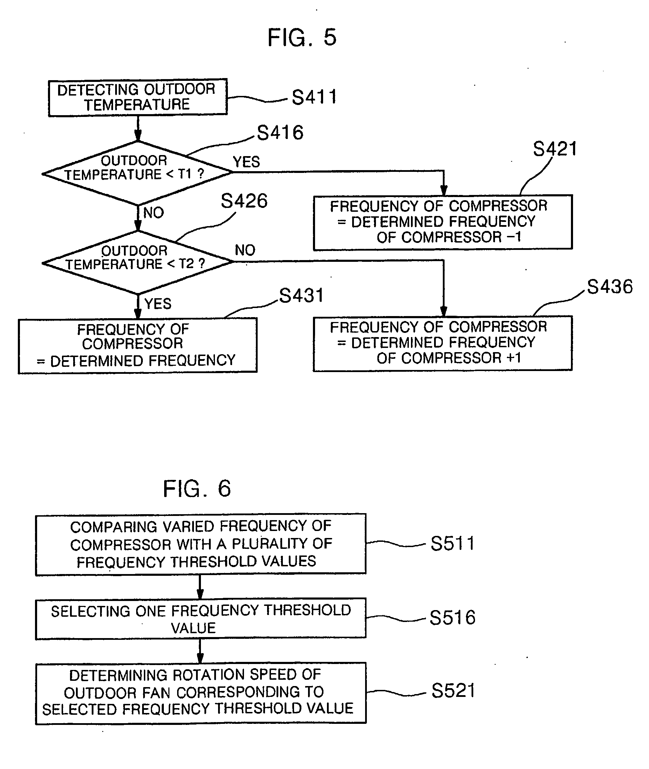

Then, the steps S400 of varying the determined frequency of the compressor will be described with reference to FIG. 5.

FIG. 5 is a flowchart showing the method of varying the frequency of the compressor in FIG. 2. Referring to FIG. 5, an outdoor-temperature detecting sensor (not shown) detects an outdoor temperature and it is determined whether or not the outdoor temperature is lower than a first outdoor-temperature threshold value (T1) (S411, S416). The outdoor-temperature detecting sensor is disposed at a predetermined position of the outdoor heat exchanging unit 20 and detects a temperature of a cool air exhausted out of the exterior of the room.

If the outdoor temperature is lower than the first outdoor-temperature threshold value (T1), a frequency reduced by 1 mode from the determined frequency of the compressor is determined as a new frequency of the compressor (S421).

For example, if the determined frequency of the compressor is "F3", "F2" is determined as the new frequency of the compressor.

If the outdoor temperature is higher than the first outdoor-temperature threshold value (T2), it is determined whether or not the outdoor temperature is lower than a second outdoor-temperature threshold value (T2) (S426).

At this time, it is desirable that the second outdoor-temperature threshold value (T2) be higher than the first outdoor-temperature threshold value (T1).

If the outdoor temperature is lower than the second outdoor-temperature threshold value (T2), the determined frequency of the compressor is determined as the new frequency of the compressor (S431). In other words, if the outdoor temperature has a value between the first outdoor-temperature threshold value (T1) and the second outdoor-temperature threshold value (T2), the determined frequency of the compressor is used without any change.

If the outdoor temperature is higher than the second outdoor-temperature threshold value (T2), a frequency increased by 1 mode from the determined frequency of the compressor is determined as the new frequency of the compressor (S436).

According to the step S400, by comparing the outdoor temperature detected by the outdoor-temperature detecting sensor with the predefined first and second outdoor-temperature critical values, the determined frequency of the compressor is adjusted. By adjusting the frequency for driving the compressor, the power consumption can be reduced and the power efficiency can be maximized.

Meanwhile, while the step S400 is performed so as to reduce the power consumption, the step S400 can be omitted if the reduction of the power consumption is not required. In other words, the compressor can be driven using the frequency determined in the step S300.

Then, the step S500 of determining the rotation speed of the indoor fan using the varied frequency of the compressor will be described with reference to FIG. 6.

FIG. 6 is a flowchart showing the method of determining the rotation speed of the indoor fan in FIG. 2. Referring to FIG. 6, by comparing the varied frequency of the compressor with a plurality of frequency threshold values, one frequency threshold value is selected (S511, S516). Here, the plurality of frequency threshold values can be set to F1, F2, F3, F4 or F5. The "F1" is the lowest frequency threshold value and the frequency threshold values increase as it goes from F2 to F5.

The rotation speed of the indoor fan is determined using one frequency threshold value (S521). In general, the frequency is proportional to the rotation speed of the indoor fan. Accordingly, the plurality of frequency threshold values can be stored corresponding to the rotation speed of the indoor fan. In other words, "F5", "F4", "F3", "F2", "F1" and "F0" are stored corresponding to "I6", "I5", "I4", "I3", "I2" and "I1", respectively. If the varied frequency of the compressor is higher than one of the threshold values, the rotation speed stored corresponding to the one threshold value is determined. For example, if the varied frequency of the compressor is higher than the frequency threshold value "F3", the speed corresponding to "I4" is determined as the rotation speed of the indoor fan.

Then, the air conditioner is operated using the rotation speed of the outdoor fan, the varied frequency of the compressor and the rotation speed of the indoor fan, which are calculated in the steps S200, S400 and S500 (S600). In other words, the outdoor fan, the compressor and the indoor fan are driven according to the rotation speed of the outdoor fan, the varied frequency of the compressor and the rotation speed of the indoor fan, respectively.

Since the outdoor fan, the compressor and the indoor fan are driven according to the changed information (the rotation speed of the outdoor fan, the varied frequency of the compressor and the rotation speed of the indoor fan), it is apparent that the indoor humidity and the indoor temperature will be changed.

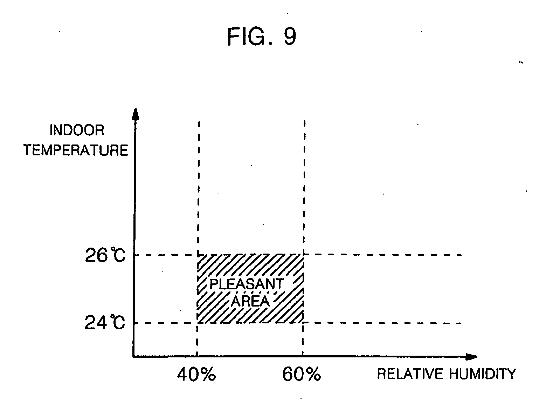

By operating the air conditioner in the above-described manner, the changed indoor temperature and humidity are detected and it is determined whether or not the indoor environment containing the current indoor temperature and humidity satisfies the pleasant area conditions (S700). Here, as shown in FIG. 9, the pleasant area conditions means an area surrounded by the indoor temperature of 24° to 26° and the indoor humidity of 40% to 60%.

Accordingly, the air conditioner determines whether or not the changed indoor temperature and humidity satisfy the pleasant area conditions. The air conditioner repeatedly carries out the steps S200, S300, S400, S500 and S600 until the changed indoor temperature and humidity satisfy the pleasant area conditions.

As described above, by changing the rotation speed of the outdoor fan, the frequency of the compressor and the rotation speed of the indoor fan until satisfying the pleasant area conditions, the continuous indoor dehumidification and maintenance of the constant temperature can be achieved so that the pleasant indoor environment is provided to the user.

Further, compared with the related art, the power consumption is reduced to 20% to 30%, thus giving a feeling of satisfaction to the user.

The forgoing embodiment is merely exemplary and is not to be construed as limiting the present invention. The present teachings can be readily applied to other types of apparatuses. The description of the present invention is intended to be illustrative, and not to limit the scope of the claims.

## Claims

1. An operating method of a power-saving and dehumidifying air conditioner, the operating method comprising the steps of:
a) determining a rotation speed of an outdoor fan using a temperature fuzzy relationship table based on a temperature difference and a temperature variation rate;
b) determining a frequency of a compressor using a humidity fuzzy relationship table based on a humidity difference and a humidity variation rate;
c) varying the determined frequency of the compressor using an outdoor temperature;
d) determining a rotation speed of an indoor fan proportional to the varied frequency of the compressor;
e) operating the air conditioner according to the rotation speed of the outdoor fan, the varied frequency of the compressor and the rotation speed of the indoor fan;
f) determining whether or not a current indoor environment satisfies pleasant area conditions; and
g) repeatedly performing the steps a) to f) until the current indoor environment satisfies the pleasant area conditions.

2. The operating method of claim 1, wherein the rotation speed of the outdoor fan is determined using a fuzzy logic algorithm.

3. The operating method of claim 1, wherein the frequency of the compressor is determined using a fuzzy logic algorithm.

4. The operating method of claim 1, wherein the temperature difference in the step a) is a difference between an indoor temperature and a set temperature, the indoor temperature being detected by an indoor-temperature detecting sensor, the set temperature being set by a user.

5. The operating method of claim 1, wherein the temperature variation rate in the step a) is a rate with respect to a time between a current indoor temperature detected by an indoor-temperature detecting sensor and an indoor temperature detected prior to a predetermined time from the current indoor temperature.

6. The operating method of claim 1, wherein the humidity difference in the step b) is a difference between an indoor humidify and a set humidity, the indoor humidity being detected by an indoor-humidity detecting sensor, the set humidity being set by a user.

7. The operating method of claim 1, wherein the humidity variation rate in the step b) is a rate with respect to a time between a current indoor humidity detected by an indoor-humidity detecting sensor and an indoor humidity detected prior to a predetermined time from the current indoor humidity.

8. The operating method of claim 1, wherein the temperature fuzzy relationship table in the step a) stores the rotation speed of the outdoor fan with respect to the temperature difference and the temperature variation rate.

9. The operating method of claim 1, wherein the humidity fuzzy relationship table in the step b) stores the frequency of the compressor with respect to the humidity difference and the humidity variation rate.

10. The operating method of claim 1, wherein the step a) includes the steps of:
comparing the temperature difference with a plurality of temperature-difference threshold values to select one temperature-difference threshold value;
comparing the temperature variation rate with a plurality of temperature-variation rate threshold vales to select one temperature-variation rate threshold value; and
determining the rotation speed of the outdoor fan corresponding to the selected temperature-difference threshold value and the selected temperature-variation rate threshold value in the temperature fuzzy relationship table.

11. The operating method of claim 1, wherein the step b) includes the steps of:
comparing the humidity difference with a plurality of humidity-difference threshold values to select one humidity-difference threshold value;
comparing the humidity variation rate with a plurality of humidity-variation rate threshold vales to select one humidity-variation rate threshold value; and
determining the frequency of the compressor corresponding to the selected humidity-difference threshold value and the selected humidity-variation rate threshold value in the humidity fuzzy relationship table.

12. The operating method of claim 1, wherein, in the step c), if the outdoor temperature is lower than a first outdoor-temperature threshold value, the frequency of the compressor is relatively reduced.

13. The operating method of claim 1, wherein, in the step c), if the outdoor temperature is higher than a second outdoor-temperature threshold value, the frequency of the compressor is relatively increased.

14. The operating method of claim 1, wherein, in the step c), if the outdoor temperature is in a range between a first outdoor-temperature threshold value and a second outdoor-temperature threshold value, the frequency of the compressor is not changed.

15. The operating method of claim 1, wherein the step d) includes the steps of:
comparing the varied frequency of the compressor with a plurality of frequency threshold values to select one frequency threshold value; and
determining the rotation speed of the indoor fan corresponding to the selected frequency threshold value.

16. The operating method of claim 15, wherein the plurality of frequency threshold values are stored corresponding to the respective rotation speeds of the indoor fan.

17. The operating method of claim 1, wherein, in the step e), the outdoor fan is driven according to the rotation speed of the outdoor fan.

18. The operating method of claim 1, wherein, in the step e), the compressor is driven according to the varied frequency of the compressor.

19. The operating method of claim 1, wherein, in the step e), the indoor fan is driven according to the rotation speed of the indoor fan.

20. The operating method of claim 1, wherein the pleasant area conditions is an indoor temperature of 24° to 26° and an indoor humidity of 40% to 60%.

## Patentansprüche

1. Verfahren zum Betreiben einer energiesparenden und entfeuchtenden Klimaanlage, wobei das Verfahren die Schritte umfasst:
a) Bestimmung einer Rotationsgeschwindigkeit eines Außengebläses unter Verwendung einer Temperatur-Fuzzy-Beziehungstabelle, basierend auf einer Temperaturdifferenz und einer Temperaturschwankungsrate;
b) Bestimmung einer Frequenz eines Kompressors unter Verwendung einer Luftfeuchtigkeits-Fuzzy-Beziehungstabelle, basierend auf einer Luftfeuchtigkeitsdifferenz und einer Luftfeuchtigkeitsschwankungsrate;
c) Verändern der ermittelten Frequenz des Kompressors unter Verwendung einer Außentemperatur;
d) Bestimmung einer Rotationsgeschwindigkeit eines Innengebläses, die proportional zu der veränderten Frequenz des Kompressors ist;
e) Betreiben der Klimaanlage gemäß der rotationsgeschwindigkeit des Außengebläses, der veränderten Frequenz des Kompressors und der Rotationsgeschwindigkeit des Innengebläses;
f) Bestimmung ob ein bestehendes Innenraumklima angenehmen Umgebungsbedingungen gerecht wird; und
g) Wiederholtes Ausführen der Schritte a) bis f) bis das bestehende Innenraumklima den angenehmen Umgebungsbedingungen gerecht wird.

2. Verfahren nach Anspruch 1, wobei die Rotationsgeschwindigkeit des Außengebläses unter Verwendung eines Fuzzy-Logik-Algorithmus bestimmt wird.

3. Verfahren nach Anspruch 1, wobei die Frequenz des Kompressors unter Verwendung eines Fuzzy-Logik-Algorithmus bestimmt wird.

4. Verfahren nach Anspruch 1, wobei die Temperaturdifferenz aus Schritt a) die Differenz zwischen einer Innentemperatur und einer gewählten Temperatur ist, wobei die Innentemperatur über einen Innentemperatursensor ermittelt und die gewählte Temperatur von einem Benutzer eingestellt wird.

5. Verfahren nach Anspruch 1, wobei die Temperaturschwankungsrate aus Schritt a) eine Rate in Abhängigkeit der Zeit zwischen einer aktuell von einem Innentemperatursensor ermittelten Innentemperatur und einer Temperatur, die zu einer vorbestimmten Zeit vor der aktuellen Innentemperatur ermittelt wurde.

6. Verfahren nach Anspruch 1, wobei die Luftfeuchtigkeitsdifferenz aus Schritt b) die Differenz zwischen einer Innenluftfeuchtigkeit und einer gewählten Luftfeuchtigkeit ist, wobei die Innenluftfeuchtigkeit über einen Innen-Luftfeuchtigkeitssensor ermittelt und die gewählte Luftfeuchtigkeit von einem Benutzer eingestellt wird.

7. Verfahren nach Anspruch 1, wobei die Luftfeuchtigkeitsschwankungsrate aus Schritt b) eine Rate in Abhängigkeit der Zeit zwischen einer aktuell von dem Innen-Luftfeuchtigkeitssensor ermittelten Luftfeuchtigkeit und einer Innenluftfeuchtigkeit, die zu einer vorbestimmten Zeit vor der aktuellen Innenluftfeuchtigkeit ermittelt wurde.

8. Verfahren nach Anspruch 1, wobei die Temperatur-Fuzzy-Beziehungstabelle aus Schritt a) die Rotationsgeschwindigkeit des Außengebläses unter Berücksichtigung der Temperaturdifferenz und der Temperaturschwankungsrate speichert.

9. Verfahren nach Anspruch 1, wobei die Luftfeuchtigkeit-Fuzzy-Beziehungstabelle aus Schritt b) die Frequenz des Kompressors unter Berücksichtigung der Luftfeuchtigkeitsdifferenz und der Luftfeuchtigkeitsschwankungsrate speichert.

10. Verfahren nach Anspruch 1, wobei Schritt a) folgende Schritte umfasst:
Vergleichen der Temperaturdifferenz mit einer Vielzahl an Temperaturdifferenz-Grenzwerten, um einen Temperaturdifferenz-Grenzwert auszuwählen;
Vergleichen der Temperaturschwankungsrate mit einer Vielzahl an Temperatuschwankungsrate-Grenzwerten, um einen Temperaturschwankungsrate-Grenzwert auszuwählen; und
Bestimmung der Rotationsgeschwindigkeit des Außengebläses entsprechend dem gewählten Temperaturdifferenz-Grenzwert und dem gewählten Temperaturschwankungsrate-Grenzwert in der Temperatur-Fuzzy-Beziehungstabelle.

11. Verfahren nach Anspruch 1, wobei Schritt b) folgende Schritte umfasst:
Vergleichen der Luftfeuchtigkeitsdifferenz mit einer Vielzahl an Luftfeuchtigkeitsdifferenz-Grenzwerten, um einen Luftfeuchtigkeitsdifferenz-Grenzwert auszuwählen;
Vergleichen der Luftfeuchtigkeitsschwankungsrate mit einer Vielzahl an Luftfeuchtigkeitsschwankungsrate-Grenzwerten, um einen Luftfeuchtigkeitsschwankungsrate-Grenzwert auszuwählen; und
Bestimmung der Frequenz des Kompressors entsprechend dem gewählten Luftfeuchtigkeitsdifferenz-Grenzwert und dem gewählten Luftfeuchtigkeitsschwankungsrate-Grenzwert in der Luftfeuchtigkeits-Fuzzy-Beziehungstabelle.

12. Verfahren nach Anspruch 1, wobei in Schritt c), wenn die Außentemperatur niedriger als ein erster Außentemperatur-Grenzwert ist, die Frequenz des Kompressors relativ reduziert wird.

13. Verfahren nach Anspruch 1, wobei in Schritt c), wenn die Außentemperatur höher als ein zweiter Außentemperatur-Grenzwert ist, die Frequenz des Kompressors relativ erhöht wird.

14. Verfahren nach Anspruch 1, wobei in Schritt c), wenn die Außentemperatur in einem Bereich zwischen einem ersten Außentemperatur-Grenzwert und einem zweiten Außentemperatur-Grenzwert ist, die Frequenz des Kompressors nicht verändert wird.

15. Verfahren nach Anspruch 1, wobei Schritt d) folgende Schritte umfasst:
Vergleichen der veränderten Frequenz des Kompressors mit einer Vielzahl an Frequenz-Grenzwerten, um einen Frequenz-Grenzwert auszuwählen; und
Bestimmung der Rotationsgeschwindigkeit des Innengebläses entsprechend dem gewählten Frequenz-Grenzwert.

16. Verfahren nach Anspruch 15, wobei die Vielzahl an Frequenz-Grenzwerten entsprechend den zugehörigen Rotationsgeschwindigkeiten des Innengebläses gespeichert werden.

17. Verfahren nach Anspruch 1, wobei in Schritt e) das Außengebläse entsprechend der Rotationsgeschwindigkeit des Außengebläses angetrieben wird.

18. Verfahren nach Anspruch 1, wobei in Schritt e) der Kompressor entsprechend der veränderten Frequenz des Kompressors angetrieben wird.

19. Verfahren nach Anspruch 1, wobei in Schritt e) das Innengebläse entsprechend der Rotationsgeschwindigkeit des Innengebläses angetrieben wird.

20. Verfahren nach Anspruch 1, wobei die angenehmen Umgebungsbedingungen eine Innentemperatur von 24° bis 26° und eine Innenluftfeuchtigkeit von 40% bis 60% aufweisen.

## Revendications

1. Procédé de fonctionnement d'un climatiseur déshumidificateur et à basse consommation, le procédé de fonctionnement comprenant les étapes consistant à :
a) déterminer une vitesse de rotation d'un ventilateur d'environnement extérieur en utilisant une table de relation floue de température sur la base d'une différence de température et d'un taux de variation de température ;
b) déterminer une fréquence d'un compresseur en utilisant une table de relation floue d'humidité sur la base d'une différence d'humidité et d'un taux de variation d'humidité ;
c) varier la fréquence déterminée du compresseur en utilisant une température d'environnement extérieur ;
d) déterminer une vitesse de rotation d'un ventilateur d'environnement intérieur proportionnelle à la fréquence variée du compresseur ;
e) faire fonctionner le climatiseur selon la vitesse de rotation du ventilateur d'environnement extérieur, la fréquence variée du compresseur et la vitesse de rotation du ventilateur d'environnement intérieur ;
f) déterminer si un environnement intérieur actuel satisfait des conditions de zone agréable ou non ; et
g) réaliser à plusieurs reprises les étapes a) à f) jusqu'à ce que l'environnement intérieur actuel satisfasse les conditions de zone agréable.

2. Procédé de fonctionnement de la revendication 1, dans lequel la vitesse de rotation du ventilateur d'environnement extérieur est déterminée en utilisant un algorithme de logique floue.

3. Procédé de fonctionnement de la revendication 1, dans lequel la fréquence du compresseur est déterminée en utilisant un algorithme de logique floue.

4. Procédé de fonctionnement de la revendication 1, dans lequel la différence de température dans l'étape a) est une différence entre une température d'environnement intérieur et une température prédéterminée, la température d'environnement intérieur étant détectée par un capteur de détection de température d'environnement intérieur, la température prédéterminée étant réglée par un utilisateur.

5. Procédé de fonctionnement de la revendication 1, dans lequel le taux de variation de température dans l'étape a) est un taux par rapport à une période entre une température d'environnement intérieur actuel détectée par un capteur de détection de température d'environnement intérieur et une température d'environnement intérieur détectée avant une période prédéterminée à partir de la température d'environnement intérieur actuel.

6. Procédé de fonctionnement de la revendication 1, dans lequel la différence d'humidité dans l'étape b) est une différence entre une humidité d'environnement intérieur et une humidité prédéterminée, l'humidité d'environnement intérieur étant détectée par un capteur de détection d'humidité d'environnement intérieur, l'humidité prédéterminée étant réglée par un utilisateur.

7. Procédé de fonctionnement de la revendication 1, dans lequel le taux de variation d'humidité dans l'étape b) est un taux par rapport à une période entre une humidité d'environnement intérieur actuel détectée par un capteur de détection d'humidité d'environnement intérieur et une humidité d'environnement intérieur détectée avant une période prédéterminée à partir de l'humidité d'environnement intérieur actuel.

8. Procédé de fonctionnement de la revendication 1, dans lequel la table de relation floue de température dans l'étape a) stocke la vitesse de rotation du ventilateur d'environnement extérieur par rapport à la différence de température et au taux de variation de température.

9. Procédé de fonctionnement de la revendication 1, dans lequel la table de relation floue d'humidité dans l'étape b) stocke la fréquence du compresseur par rapport à la différence d'humidité et au taux de variation d'humidité.

10. Procédé de fonctionnement de la revendication 1, dans lequel l'étape a) comprend les étapes consistant à :
comparer la différence de température à une pluralité de valeurs de seuil de différence de température pour sélectionner une valeur de seuil de différence de température ;
comparer le taux de variation de température à une pluralité de valeurs de seuil de taux de variation de température pour sélectionner une valeur de seuil de taux de variation de température ; et
déterminer la vitesse de rotation du ventilateur d'environnement extérieur correspondant à la valeur de seuil de différence de température sélectionnée et la valeur de seuil de taux de variation de température sélectionnée dans la table de relation floue de température.

11. Procédé de fonctionnement de la revendication 1, dans lequel l'étape b) comprend les étapes consistant à :
comparer la différence d'humidité à une pluralité de valeurs de seuil de différence d'humidité pour sélectionner une valeur de seuil de différence d'humidité ;
comparer le taux de variation d'humidité à une pluralité de valeurs de seuil de taux de variation d'humidité pour sélectionner une valeur de seuil de taux de variation d'humidité ; et
déterminer la fréquence du compresseur correspondant à la valeur de seuil de différence d'humidité sélectionnée et la valeur de seuil de taux de variation d'humidité sélectionnée dans la table de relation floue d'humidité.

12. Procédé de fonctionnement de la revendication 1, dans lequel, dans l'étape c), si la température d'environnement extérieur est inférieure à une première valeur de seuil de température d'environnement extérieur, la fréquence du compresseur est relativement réduite.

13. Procédé de fonctionnement de la revendication 1, dans lequel, dans l'étape c), si la température d'environnement extérieur est supérieure à une seconde valeur de seuil de température d'environnement extérieur, la fréquence du compresseur est relativement augmentée.

14. Procédé de fonctionnement de la revendication 1, dans lequel, dans l'étape c), si la température d'environnement extérieur est dans une plage entre une première valeur de seuil de température d'environnement extérieur et une seconde valeur de seuil de température d'environnement extérieur, la fréquence du compresseur n'est pas changée.

15. Procédé de fonctionnement de la revendication 1, dans lequel l'étape d) comprend les étapes consistant à :
comparer la fréquence variée du compresseur à une pluralité de valeurs de seuil de fréquence pour sélectionner une valeur de seuil de fréquence ; et
déterminer la vitesse de rotation du ventilateur d'environnement intérieur correspondant à la valeur de seuil de fréquence sélectionnée.

16. Procédé de fonctionnement de la revendication 15, dans lequel la pluralité de valeurs de seuil de fréquence sont stockées de façon correspondante aux vitesses de rotation respectives du ventilateur d'environnement intérieur.

17. Procédé de fonctionnement de la revendication 1, dans lequel, dans l'étape e), le ventilateur d'environnement extérieur est entraîné selon la vitesse de rotation du ventilateur d'environnement extérieur.

18. Procédé de fonctionnement de la revendication 1, dans lequel, dans l'étape e), le compresseur est entraîné selon la fréquence variée du compresseur.

19. Procédé de fonctionnement de la revendication 1, dans lequel, dans l'étape e), le ventilateur d'environnement intérieur est entraîné selon la vitesse de rotation du ventilateur d'environnement intérieur.

20. Procédé de fonctionnement de la revendication 1, dans lequel les conditions de zone agréable sont une température d'environnement intérieur de 24° à 26° et une humidité d'environnement intérieur de 40 % à 60 %.
